# EUROPEAN PATENT APPLICATION

(11) **EP 1 425 977 A1**
(43) Date of publication of application: **09.06.2004**
(21) Application number: 02798043.2
(22) Date of filing: 06.09.2002
(51) Int. Cl.: A23L 1/22, A23L 1/226, A23L 1/39

(54) **FLAVORING MATERIALS AND FOODS AND DRINKS CONTAINING THE SAME**

(30) Priority: 10.09.2001 JP 2001273676
(71) Applicant: Ajinomoto Co., Inc., Tokyo 104-8315 (JP)
(72) Inventor: KATO, Yuji, c/o AJINOMOTO CO., INC. Food Products, Kawasaki-shi, Kanagawa 210-8681 (JP); KAWAGUCHI, Hirokazu, c/o AJINOMOTO CO., INC. Food, Kawasaki-shi, Kanagawa 210-8681 (JP); HAYASHI, Kazuhiro, c/o AJINOMOTO CO., INC. Food, Kawasaki-shi, Kanagawa 210-8681 (JP); MIYAMURA, Naohiro, c/o AJINOMOTO CO., INC. Food, Kawasaki-shi, Kanagawa 210-8681 (JP)
(74) Representative: Strehl Schübel-Hopf & Partner
(86) International application number: PCT/JP2002/009135
(87) International publication number: WO 2003/022075

(57) **Abstract**

A raw flavor material element giving "enriched flavor" to various raw flavor materials or foods and drinks, without any deterioration of the essential flavors thereof, raw food materials or foods and drinks containing the raw flavor material element, and a method for improving the flavor of a raw flavor material or a food or drink, using the raw flavormaterial element, where the raw flavor material element characteristically contains the following ingredients:
a. sotolone (3-hydroxy-4,5-dimethyl-2(*5H*)-furanone) and/or 5-ethyl-3-hydroxy-4-methyl-2(*5H*)-furanone, and
b. one or two or more selected from the group consisting of DMS (dimethyl sulfide), methane thiol, hydrogen sulfide, dimethyl disulfide and dimethyl trisulfide.

## Description

### BACKGROUND OF THE INVENTION

### Field of the Invention

The present invention relates to a novel raw flavor material element giving and enhancing "enriched flavor" for raw flavor materials or foods and drinks, raw flavor materials or foods and drinks containing the raw flavor material element, and a method for improving the flavors of raw flavor materials or foods and drinks, using the raw flavor material element.

### Description of the Related Art

As the method for giving "enriched flavor" to various foods and drinks, methods comprising adding HVP (hydrolyzates of vegetable proteins), HAP (hydrolyzates of animal proteins), yeast extract, meat extract and extracts of fish and shellfish have been known. Such technique has been used in the industry of foods and drinks. In case that the technique is used for various foods and drinks, however, tastes and flavors unique to these extracts and the like may eventually damage the flavor balance of some foods and drinks in their entirety, disadvantageously, although the "enriched flavor" is given to the foods and drinks.

In case of addition of seasonings decomposing hydrochloric acid, such as HVP and HAP to various foods and drinks, furthermore, 3-monochloropropanediol is generated in the foods and drinks. As an oncogene material, the substance has been drawing concerns mainly in European countries and USA.

Alternatively, reports have been issued, telling that a method comprising adding sotolone (3-hydroxy-4,5-dimethyl-2(*5H*)-furanone)-related substance (GB 6851626A) and a method comprising adding a combination of sotolone and ketones and phenols, such as furaneol (2,5-dimethyl-4-hydroxy-3(*2H*)-furanone) (Japanese Patent Laid-openNo. Hei 10-179049, etc.) as methods forgiving HVP-like flavor can improve food flavors. On comparison, however, these methods and actual HVP additionprocess bring about organoleptic difference from each other. Thus, these methods have not been sufficient enough to give HVP-like "enriched flavor".

Thus, the present inventors have made investigations about the development of a novel raw flavor material element capable of giving "enriched flavor", without any deterioration of essential flavors of various foods and drinks.

### SUMMARY OF THE INVENTION

The inventors have made investigations so as to solve the problem. Then, the inventors have found that HVP-like fragrance other than that of sotolone can strongly be sniffed at a number of peaks, by a sniffing method on gas chromatographic means and that such fragrance has a relation to the endowment of "enriched flavor". Thus, the invention has been achieved.

In summary, the invention provides the following aspects 1 to 5.
1. A raw flavor material element containing the following ingredients:
   a. sotolone (3-hydroxy-4,5-dimethyl-2(*5H*)-furanone) and/or 5-ethyl-3-hydroxy-4-methyl-2(*5H*)-furanone, and
   b. one or two or more selected from the group consisting of DMS (dimethyl sulfide), methane thiol, hydrogen sulfide, dimethyl disulfide and dimethyl trisulfide.
2. A raw flavor material element described in the first aspect, which additionally contains as the ingredient "c" guaiacol (2-methoxyphenol) and/or 2-methoxy-4-methylphenol.
3. A raw flavor material element described in the first or second aspect, which additionally contains as the ingredient "d" one or two or more selected from the group consisting of methional [3-(methylthio)propionaldehyde], isovaleric acid (3-methyl butyric acid), furaneol (2,5-dimethyl-4-hydroxy-3(*2H*)-furanone) and 2,6-dimethoxyphenol.
4. A raw flavor material or a food or drink, which contains a raw flavor material element described in any one of the first to third aspects.
5. A method for improving the flavor of a raw flavor material or a food or drink, comprising adding a raw flavor material element described in any one of the first to third aspects.

### DETAILED DESCRIPTION OF THE INVENTION

The invention will now be described below.

In accordance with the invention, the term "raw flavor material element" means an element responsible for the endowment of flavor to raw flavor materials or foods and drinks, which contains the following ingredients:
a. sotolone (3-hydroxy-4,5-dimethyl-2(*5H*)-furanone) and/or 5-ethyl-3-hydroxy-4-methyl-2(*5H*)-furanone, and
b. one or two or more selected from the group consisting of DMS (dimethyl sulfide), methane thiol, hydrogen sulfide, dimethyl disulfide and dimethyl trisulfide and may additionally contain as the ingredient "c" guaiacol (2-methoxyphenol) and/or 2-methoxy-4-methylphenol. Further, the term "raw flavor material element" means an element responsible for the endowment of flavor to raw flavor materials or foods and drinks, which may contain as the ingredient "d" one or two or more selected from the group consisting of methional [3-(methylthio)propionaldehyde], isovaleric acid (3-methyl butyric acid), furaneol (2,5-dimethyl-4-hydroxy-3(*2H*)-furanone) and 2,6-dimethoxyphenol and which may preferably contain all of the four substances. The element may be in liquids, solids such as powder or paste or the like.

In accordance with the invention, the term "raw flavor material" means a seasoning for use in the endowment of flavor to foods and drinks, which includes for example various sauces and gravies such as Worcestershire sauce, mayonnaise and ketchup, meat extracts such as chicken extract, fish and shellfish extracts, curry powder, various vegetable extracts, soy sauce, vegetable protein-hydrolyzed amino acid solutions (HVP), and animal protein-hydrolyzed amino acid solutions (HAP). The raw flavor material may be used during a process of producing foods and drinks or may be used on intake. Furthermore, the form thereof may satisfactorily be in liquids, solids or paste. The raw flavor material element of the invention may preferably be added to seasonings, which are produced by reacting proteinase or microorganisms with protein degradation potencies with proteins or protein-containing materials.

Furthermore, the "foods and drinks" containing the raw flavor material element of the invention include Japanese-style cooking recipes such as soups, noodles, boiled fishcakes with eggs and Japanese radishes ("Oden" in Japanese), steamed egg soup with chicken and fillings, Japanese-style egg roll, various cooked vegetables with meats, grilled fish and pickles; Chinese recipes such as Chinese noodle, Chinese rice with fried vegetable and meat toppings, fried rice, Chili soybean curb recipes (mabo tofu) , various fried vegetables with meat and fishes in gravies, stuffed meat and vegetables seasoned with garlic as wrapped with thin wheat skin (gyoza), soup with sharkfillet, and Chinese soups; western-style recipes such as curry sauce with rice, beef stew, white stew, consomme soup, hamburger, and steak; snacks and instant noodles.

The presence of sotolone (3-hydroxy-4,5-dimethyl-2 (*5H*)-furanone) contained in the raw flavor material element in accordance with the invention is verified in natural origins, for example in the seed of a plant of the family Leguminosae, namely Trigonella foenum-graecum, sherry and coffee. Furthermore, sotolone is generallyproduced at a process of extracting sotolone from Trigonella foenum-graecum or the seed thereof. Such extract can be used as the sotolone of the invention. Specifically, such process includes the processes described in Japanese Patent Laid-open No. Hei 2-261358 and Japanese Patent Laid-openNo. Hei 11-69953. For example, 5-ethyl-3-hydroxy-4-methyl-2(*5H*)-furanone can be used as a furanone as an alternative of sotolone.

DMS (dimethyl sulfide) used in accordance with the invention is a decomposition product of methionine and MMS (methylmethionine sulfonium: vitamin U) and is contained in nature, for example in seaweed, Japanese green tea and corn. Methane thiol, hydrogen sulfide, dimethyl disulfide and dimethyl trisulfide can be used as disulfides and trisulfides as DMS alternatives.

Guaiacol for use in accordance with the invention is contained in nature in saps and the like and in foods (seasonings) such as soy sauce. 2-Methoxy-4-methylphenol for example can be used as phenol as an alternative of guaiacol.

Further, the raw flavor material element of the invention may further contain one or two or more selected from the group consisting of methional [3-(methylthio)propionaldehyde], isovaleric acid (3-methyl butyric acid), furaneol (2,5-dimethyl-4-hydroxy-3(*2H*)-furanone) and 2,6-dimethoxyphenol. In particular, all the four substances described above are preferably used.

Methional is contained in foods such as soy sauce and cheese. Isovaleric acid naturally exists in essential oils from hop, peppermint and rosemary, for example. Furthermore, 2,6-dimethoxyphenol is a component of smokyodor and is contained in smoked products.

The ingredient "a" contained in the raw flavor material element of the invention is used to a content of 10⁻¹⁰ % by weight to 10 % by weight, preferably 10⁻¹⁰ % by weight to 10⁻⁵ % by weight in such raw flavor materials or foods or drinks, while the ingredient "b" is used therein to a content of 10⁻¹⁰ % by weight to 1 % by weight, preferably 10⁻¹⁰ % by weight to 10⁻⁴ % by weight.

Furthermore, the ingredient "c" may be used to a content of 10⁻¹⁰ % by weight to 1 % by weight, preferably 10⁻¹⁰ % by weight to 10⁻⁵ % by weight.

As to the ingredient "d" in possible combination with a raw flavor material element containing the ingredients "a" and "b" or a raw flavor material element containing the ingredients "a", "b" and "c", methional is used in a raw flavor material or a food or drink, within a range to a content of 10⁻¹⁰ % by weight to 1 % by weight, preferably 10⁻¹⁰ % by weight to 10⁻⁵ % by weight; isovaleric acid is used therein within a range to a content of 10⁻¹⁰ % by weight to 1 % by weight, preferably 10⁻¹⁰ % by weight to 10⁻⁵ % by weight; furaneol is used therein within a range to a content of 10⁻¹⁰ % by weight to 1 % by weight, preferably 10⁻¹⁰ % by weight to 10⁻⁵ % by weight; and 2,6-dimethoxyphenol is used therein within a range to a content of 10⁻¹⁰ % by weight to 1 % by weight, preferably 10⁻¹⁰ % by weight to 10⁻⁵ % by weight.

Above these contents, the characteristic flavors of these ingredients are so strong that the ingredients deteriorate the essential flavors of various foods and seasonings. Below these contents, the effect of these ingredients on the endowment of enriched flavor cannot be sufficiently given.

The raw flavor material element of the invention can give enriched flavor, via the addition of a trace amount thereof to a raw flavor material or a food or drink. In accordance with the invention, the term "enriched flavor" means the intensity of initial taste and the expansion of the taste at the middle to last stages of ingestion or swallowing. Any single raw flavor material of for example amino acids such as sodium glutamate and nucleic acid-related compounds such as sodium inosinate and sodium guanylate cannot reproduce such enriched flavor. Regarding the amount of a raw flavor material element to be added for the endowment of enriched flavor, the range of the optimum amounts thereof varies, depending on a subject raw flavor material or a food or drink. A person skilled in the art can quite readily determine the appropriate amount thereof at a simple preliminary trial.

In accordance with the invention, as described above, a raw flavor material element containing the ingredients "a" and "b" when used can endow such "enriched flavor" to the resulting raw flavor material or food or drink. The raw flavor material element additionally containing the ingredient "c" can enhance the initial HVP-like taste and further enhance the soysauce-like flavor. The raw flavor material element still additionally containing the ingredient "d" can characteristically enhance the complex mix taste of the enriched flavor. Further, the ingredient "d" is one or more selected from the group consisting of methional [3-(methylthio)propionaldehyde], isovaleric acid (3-methyl butyric acid), furaneol (2,5-dimethyl-4-hydroxy-3(*2H*)-furanone) and 2,6-dimethoxyphenol. When all the substances described above are contained in the raw flavor material element, however, the entire flavor can be harmonized in balance, effectively.

### DESCRIPTION OF PREFERRED EMBODIMENTS

The invention will specifically be described in the following examples. But the invention is not limited to these examples.

### Example 1

To 1.3 g of a commercially available beef consomme soup base dissolved in hot water (100 ml) were added sotolone, DMS, guaiacol, methional, isovaleric acid, furaneol and 2, 6-dimethoxyphenol to 3 × 10⁻⁹ % by weight, 6 × 10⁻⁹ % by weight, 1.5 × 10⁻⁹ % by weight, 2 × 10⁻¹⁰ % by weight, 6 × 10⁻⁹ % by weight, 5 × 10⁻¹⁰ % by weight, and 1.5 × 10⁻⁹ % by weight, respectively, to prepare a soup with addition of the raw flavor material element of the invention. As a control, a beef consomme soup with no addition was used. The beef consomme soup recovered as described above and the control soup were evaluated in an organoleptic fashion by 20 taste panelists according to the two-point comparison method. The results are shown in Table 1.

**Table 1**

| | Inventive lot | Control |
|---|---|---|
| Preferable fragrance | 13 | 7 |
| Preferable flavor | 14 | 6 |
| Intense initial taste | 18* | 2 |
| Greater taste expansion | 17* | 3 |
| Generally preferable | 18* | 2 |

| | | |
|---|---|---|
| * : significant at a level of 5 % | | |

### Example 2

To 10 g of a commercially available curry roux dissolved in hot water (100 ml) were added sotolone, DMS, guaiacol, methional, isovaleric acid, furaneol and 2,6-dimethoxyphenol to 3 × 10⁻⁹ % by weight, 6 × 10⁻⁹ % by weight, 1.5 × 10⁻⁹ % by weight, 2 × 10⁻¹⁰ % by weight, 6 × 10⁻⁹ % by weight, 5 × 10⁻¹⁰ % by weight, and 1.5 × 10⁻⁹ % by weight, respectively, to prepare a curry sauce with addition of the raw flavor material element of the invention. As a control, a curry sauce with no addition was used. The curry sauce recovered as described above and the control curry sauce were evaluated in an organoleptic fashion by 20 taste panelists according to the two-point comparison method. The results are shown in Table 2.

**Table 2**

| | Inventive lot | Control |
|---|---|---|
| Preferable fragrance | 14 | 6 |
| Preferable flavor | 15 | 5 |
| Intense initial taste | 18* | 2 |
| Greater taste expansion | 17* | 3 |
| Strong spice flavor | 18* | 2 |
| Generally preferable | 18* | 2 |

| | | |
|---|---|---|
| * : significant at a level of 5 % | | |

### Example 3

To 1.3 g of a commercially available beef consomme soup base dissolved in hot water (100 ml) were added sotolone, DMS, guaiacol, methional, isovaleric acid, furaneol and 2,6-dimethoxyphenol to 3 × 10⁻⁹ % by weight, 6 × 10⁻⁹ % by weight, 1.5 × 10⁻⁹ % by weight, 2 × 10⁻¹⁰ % by weight, 6 × 10⁻⁹ % by weight, 5 × 10⁻¹⁰ % by weight, and 1.5 × 10⁻⁹ % by weight, respectively, to prepare a soup with addition of the raw flavor material element of the invention. As control 1, a commercially available beef consomme soup base (1.3 g) dissolved in hot water (100 ml) to which was then added sotolone to 3 × 10⁻⁹ % by weight alone was used. As control 2, a commercially available beef consomme soup with no addition was used. The beef consomme soup thus recovered above and the control soups 1 and 2 were evaluated in an organoleptic manner by 20 taste panelists according to the two-point comparison method. The results are shown in Table 3.

**Table 3**

| | Inventive lot | Control 2 | Control 1 |
|---|---|---|---|
| Preferable fragrance | 13 | 6 | 1 |
| Preferable flavor | 14 | 5 | 1 |
| Intense initial taste | 18* | 2 | 0 |
| Greater taste expansion | 17* | 2 | 1 |
| Generally preferable | 17* | 2 | 1 |

| | | | |
|---|---|---|---|
| *: significant at a level of 5 % | | | |

### Example 4

To 10 g of a commercially available curry roux dissolved in hot water (100 ml) were added sotolone, DMS, guaiacol, methional, isovaleric acid, furaneol and 2,6-dimethoxyphenol to 3 x 10⁻⁹ % by weight, 6 x 10⁻⁹ % by weight, 1.5 x 10⁻⁹ % by weight, 2 × 10⁻¹⁰ % by weight, 6 × 10⁻⁹ % by weight, 5 × 10⁻¹⁰ % by weight, and 1.5 × 10⁻⁹ % by weight, respectively, to prepare a curry sauce with addition of the raw flavor material element of the invention. As control 1, a commercially available curry roux (10 g) dissolved in hot water (100 ml) to which was then added sotolone to 3 × 10⁻⁹ % by weight, was used. As control 2, a curry sauce with no addition was used. The curry sauce recovered as described above and the control curry sauces 1 and 2 were evaluated in an organoleptic manner by 20 taste panelists according to the two-point comparison method. The results are shown in Table 4.

**Table 4**

| | Inventive lot | Control 2 | Control 1 |
|---|---|---|---|
| Preferable fragrance | 14 | 5 | 1 |
| Preferable flavor | 15 | 4 | 1 |
| Intense initial taste | 18* | 2 | 0 |
| Greater taste expansion | 16* | 3 | 1 |
| Strong spice flavor | 17* | 2 | 1 |
| General preferable | 18* | 1 | 1 |

| | | | |
|---|---|---|---|
| * : significant at a level of 5 % | | | |

### Example 5

To 10 g of a commercially available curry roux dissolved in hot water (100 ml) were added sotolone, DMS, guaiacol, methional, isovaleric acid, furaneol and 2,6-dimethoxyphenol to 3 × 10⁻⁹ % by weight, 6 × 10⁻⁹ % by weight, 1 . 5 × 10⁻⁹ % by weight, 2 × 10⁻¹⁰ % by weight, 6 × 10⁻⁹ % by weight, 5 × 10⁻¹⁰ % by weight, and 1.5 × 10⁻⁹ % by weight, respectively, to prepare a curry sauce with addition of the raw flavor material element of the invention, which was defined inventive lot 1. To 10 g of a commercially available curry roux dissolved in hot water (100 ml) were added sotolone, DMS, and guaiacol to 3 × 10⁻⁹ % by weight, 6 × 10⁻⁹ % by weight, and 1.5 × 10⁻⁹ % by weight, respectively, to prepare a curry sauce with addition of the raw flavor material element of the invention, which was defined inventive lot 2. As control 1, a commercially available curry roux (10 g) dissolved in hot water (100 ml) to which was then added sotolone to 3 × 10⁻⁹ % by weight alone, was used. As control 2, a curry sauce with no addition was used. The inventive curry sauce lots 1 and 2 thus recovered above, as well as the control curry sauce lots 1 and 2 were evaluated in an organoleptic fashion by 20 taste panelists according to the two-point comparison method. The results are shown in Table 5.

**Table 5**

| | Inventive lot 1 | Inventive lot 2 | Control 2 | Control 1 |
|---|---|---|---|---|
| Preferable fragrance | 6 | 13 | 1 | 0 |
| Preferable flavor | 5 | 14 | 1 | 0 |
| Intense initial taste | 3 | 16* | 1 | 0 |
| Greater taste expansion | 4 | 15 | 1 | 0 |
| Strong spice flavor | 3 | 16* | 1 | 0 |
| Generally preferable | 3 | 16* | 1 | 0 |

| | | | | |
|---|---|---|---|---|
| *: significant at a level of 5 % | | | | |

### Advantages of the Invention

As described above in detail, the novel raw flavor material element of the invention can give "enriched flavor" to various raw flavor materials or foods and drinks without any deterioration of the essential flavors thereof.

## Claims

1. A raw flavor material element containing the following ingredients:
a. sotolone (3-hydroxy-4,5-dimethyl-2(*5H*)-furanone) and/or 5-ethyl-3-hydroxy-4-methyl-2(*5H*)-furanone, and
b. one or two or more selected from the group consisting of DMS (dimethyl sulfide), methane thiol, hydrogen sulfide, dimethyl disulfide and dimethyl trisulfide.

2. A raw flavor material element according to claim 1, additionally containing as the ingredient "c" guaiacol (2-methoxyphenol) and/or 2-methoxy-4-methylphenol.

3. A raw flavor material element according to claim 1 or 2, additionally containing as the ingredient "d" one or two or more selected from the group consisting of methional [3-(methylthio)propionaldehyde], isovaleric acid (3-methyl butyric acid), furaneol (2,5-dimethyl-4-hydroxy-3(*2H*)-furanone) and 2,6-dimethoxyphenol.

4. A raw flavor material or a food or drink, containing a raw flavor material element according to claim 1, 2 or 3.

5. A raw flavor material or a food or drink according to claim 4, containing the ingredient "a" at a ratio of 10⁻¹⁰ % by weight to 10 % by weight and the ingredient "b" at a ratio of 10⁻¹⁰ % by weight to 1 % by weight.

6. A raw flavor material or a food or drink according to claim 5, additionally containing the ingredient "c" at a ratio of 10⁻¹⁰ % by weight to 1 % by weight.

7. A raw flavor material or a food or drink according to claim 5 or 6, still additionally containing one or two or more selected from methional at 10⁻¹⁰ % by weight to 1 % by weight, isovaleric acid at 10⁻¹⁰ % by weight to 1 % by weight, furaneol at 10⁻¹⁰ % by weight to 1 % by weight and 2,6-dimethoxyphenol at 10⁻¹⁰ % by weight to 1 % by weight.

8. A method for improving the flavor of a raw flavor material or a food or drink, comprising adding a raw flavor material element according to claim 1, 2 or 3 to the raw flavor material or the food or drink.

9. A method for improving the flavor of a raw flavor material or a food or drink according to claim 8, comprising adding the ingredient "a" at a ratio of 10⁻¹⁰ % by weight to 10 % by weight and the ingredient "b" at a ratio of 10⁻¹⁰ % by weight to 1 % by weight.

10. A method for improving the flavor of a raw flavor material or a food or drink according to claim 9, comprising further adding the ingredient "b" at a ratio of 10⁻¹⁰ % by weight to 1 % by weight.

11. A method for improving the flavor of a raw flavor material or a food or drink according to claim 9 or 10, comprising further adding one or two or more of methional at 10⁻¹⁰ % by weight to 1 % by weight, isovaleric acid at 10⁻¹⁰ % by weight to 1 % by weight, furaneol at 10⁻¹⁰ % by weight to 1 % by weight and 2,6-dimethoxyphenol at 10⁻¹⁰ % by weight to 1 % by weight.
